# EUROPEAN PATENT APPLICATION

(11) **EP 1 688 465 A1**
(43) Date of publication of application: **09.08.2006**
(21) Application number: 04819396.5
(22) Date of filing: 25.11.2004
(51) Int. Cl.: C09D 11/00

(54) **WATER-BASED INK COMPOSITION AND METHOD OF INK-JET RECORDING WITH THE SAME**

(30) Priority: 25.11.2003 JP 2003393958
(71) Applicant: SEIKO EPSON CORPORATION, Shinjuku-ku, Tokyo 163-0811 (JP)
(72) Inventor: ITO, Hiroshi, c/o Seiko Epson Corporation, Suwa-shi, Nagano 3928502 (JP); OTA, Hitoshi, c/o Seiko Epson Corporation, Suwa-shi, Nagano 3928502 (JP); ISHIHARA, Daisuke, c/o Seiko Epson Corporation, Suwa-shi, Nagano 3928502 (JP)
(74) Representative: Grünecker, Kinkeldey, Stockmair & Schwanhäusser Anwaltssozietät
(86) International application number: PCT/JP2004/017472
(87) International publication number: WO 2005/052073

(57) **Abstract**

Disclosed is a water-based ink composition that can be highly stably stored under high-temperature standing conditions for a long period of time and, when used with an ink jet printer, can be highly stably ejected. This ink composition is **characterized by** comprising at least a coloring material dispersion comprising a colorant and a resin including the colorant, an acetylene glycol or its ether derivative, a C1 to C5 monohydric alcohol which has a solubility in water of not less than 0.5% by weight at 20°C, a humectant, and water, the resin being insoluble in water, the coloring material dispersion being dispersible in the ink composition, the alcohol and the humectant being in mutually soluble relationship with the acetylene glycol or its ether derivative.

## Description

### RELATED APPLICATION

This application is a patent application claiming priority based on Japanese Patent Application No. 393958/2003 filed with Japanese Patent Office on November 25, 2003, and the entireties of which are incorporated herein by reference.

### BACKGROUND OF THE INVENTION

Field of the Invention
The present invention relates to a water-based ink composition with a coloring material stably dispersed therein, and an ink jet recording method using the same.

Background Art
Ink jet recording is a printing method wherein droplets of an ink composition are ejected and deposited on recording media, such as paper, to perform printing. This ink jet recording method can realize images having a combination of high resolution with high quality at a high speed by means of a relatively inexpensive apparatus.

Ink compositions used in ink jet recording generally contains water as a main ingredient and a colorant and a humectant, such as glycerin, for clogging preventive purposes and the like. A large number of water soluble dyes have been used as the colorant for the ink composition for ink jet recording, for example, from the viewpoints of high chroma of the coloring material, a wide variety of usable coloring materials, and solubility in water.

Some dyes, however, are poor in various properties such as lightfastness and waterfastness, and, thus, prints yielded by dye-based ink compositions sometimes have poor lightfastness and waterfastness. The waterfastness has been improved by a specialty recording medium comprising an ink absorptive layer for ink jet recording. For plain paper, however, there is a room for improvement.

On the other hand, pigments are superior in lightfastness and waterfastness to dyes, and, in recent years, the utilization of ink compositions for ink jet recording as a colorant has been studied for lightfastness and waterfastness improvement purposes. Since pigments are generally insoluble in water, they, together with a dispersant such as a water soluble resin, should be mixed to prepare a mixture which is then stably dispersed in a water-based ink composition composed mainly of water.

In order to stably disperse pigments in a water system, studies should be made on the type and particle diameter of pigments, the type of dispersants used, dispersing means and the like, and, up to now, a number of dispersing methods and inks for ink jet recording have been proposed. For example, water-based pigment inks comprising carbon blacks which have been dispersed with the aid of a surfactant or polymeric dispersant are known (for example, Japanese Patent Laid-Open Nos. 6074/1989 and 31881/1989). Further, an ink composition comprising water, a styrene-maleic acid copolymer, ε-caprolactam, and a pigment (for example, Japanese Patent Laid-Open No. 252467/1991), an ink composition comprising an aqueous medium, a styrene-maleic acid copolymer, and a copper phthalocyanine pigment (for example, Japanese Patent Laid-Open No. 79680/1991) have been proposed. Furthermore, a pigment-based ink using a resin comprising a dispersing resin in which not less than 60% by mole of the acid group was neutralized with an alkaline neutralizing agent has been proposed (for example, Japanese Patent Laid-Open Nos. 183920/1996 and 40895/1997). Furthermore, an ink composition using an acetylene glycol surfactant and alcohol in ink has been proposed (for example, Japanese Patent Laid-Open Nos. 239068/1992 and 322307/1994). According to these prior art techniques, certain results that stable ink compositions are obtained can be provided. However, the development of ink compositions having better stability and excellent various properties required of inks has been desired. For example, in inks for use in an ink jet recording method, in addition to the colorant, various additives, particularly water soluble organic solvents, are added from the viewpoint of optimizing various properties required of inks for the ink jet recording method. Water soluble organic solvents include humectants for preventing ink from drying, penetrating solvents or surfactants for lowering the surface tension of the ink composition to regulate ink penetration in the recording medium, and organic amines for pH adjustment of the ink composition. Some solvents among these solvents affect the dispersed colorant and inhibit the dispersibility and consequently sometimes inhibit the storage stability of the ink composition. In particular, this tendency is significant for solvents having high affinity for the surface of a pigment having a hydrophobic surface and a hydrophobic part in a dispersing resin. When this influence is developed, in some cases, an unfavorable phenomenon sometimes occurred such that the dispersing resin as the dispersant is separated from the pigment surface and is dissolved in ink and, when this ink is used as the ink for ink jet recording, ink ejection from the printer head is sometimes instable.

### SUMMARY OF THE INVENTION

The present inventors have now succeeded in providing an ink composition having excellent stability and various properties required of ink. In particular, the present inventors have found a water-based ink composition having both high ink storage stability and good ejection stability.
Accordingly, an object of the present invention is to provide an ink composition having excellent stability and various properties required of ink. In particular, an object of the present invention is to provide a water-based ink composition having both high ink storage stability and good ejection stability. According to one aspect of the present invention, there is provided a water-based ink composition characterized by comprising at least
- a coloring material dispersion comprising a colorant and a resin including the colorant,
- an acetylene glycol or its ether derivative,
- a C1 to C5 monohydric alcohol which has a solubility in water of not less than 0.5% by weight at 20°C,
- a humectant, and
- water,
the resin being insoluble in water,
the coloring material dispersion being dispersible in the ink composition,
the alcohol and the humectant being mutually soluble in the acetylene glycol or its ether derivative.

### DETAILED DESCRIPTION OF THE INVENTION

[Coloring material dispersion]
The coloring material dispersion for use in the water-based ink composition according to the present invention is in the form of particles formed of a resin including a colorant therein. This resin is insoluble in water, and, in such a state that the colorant has been included, the colorant can be stably dispersed in the ink composition. This resin will be hereinafter referred to as "dispersing resin."

Dispersing resin]
In the present invention, the dispersing resin should be a polymer that is insoluble in water and is soluble in organic solvents used in the production of a coloring material dispersion, preferably hydrophilic organic solvents such as acetone and methyl ethyl ketone. The dispersing resin further has both a hydrophobic part and a hydrophilic part. Here the hydrophobic part refers to repeating units containing an alkyl group, a cycloalkyl group, an aromatic ring, or an unneutralized group. The unneutralized group is a group neutralizable with a neutralizing agent, and examples thereof include acid groups and alkaline groups. Specific examples of the unneutralized group include carboxylic acid groups and sulfonic acid groups. The hydrophilic part refers to neutralized group-containing repeating units. The neutralized group is a group formed by neutralizing the unneutralized group and is preferably an ion group. The unneutralized group and neutralized group are preferably anionic groups. It is particularly preferred that the unneutralized group be a carboxylic acid group, and the neutralized group be a carboxylate anion group (a group of a salt of a carboxylic acid). Salts of carboxylic acids include lithium carboxylate, sodium carboxylate, potassium carboxylate, and ammonium carboxylate.

Without being bound by any particular theory, it is believed that, when the dispersing resin has the above structure, the hydrophobic part can be strongly adsorbed on the hydrophobic surface of the colorant which will be described later for inclusion of the colorant in the resin, while the hydrophilic part has affinity for water, whereby a coloring material dispersion stably dispersible in water can be obtained.

The anionic group-containing dispersing resin is prepared, for example, by polymerizing an anionic group-containing monomer (hereinafter referred to as "anionic group-containing monomer") and, if necessary, another monomer copolymerizable with this monomer in solvents. Anionic group-containing monomers include carboxylic acid group-containing monomers and sulfonic acid group-containing monomers.

The carboxylic acid group-containing monomer is preferably an acrylic monomer containing one or two carboxylic acid groups in the repeating unit. Examples of preferred carboxylic acid group-containing monomers include acrylic acid, methacrylic acid, crotonic acid, ethacrylic acid, propylacrylic acid, isopropylacrylic acid, itaconic acid, fumaric acid, and maleic acid. Among them, acrylic acid or methacrylic acid and maleic acid are preferred. Examples of preferred sulfonic acid group-containing monomers include styrenesulfonic acid, isoprenesulfonic acid, sulfobutyl methacrylate, and allylsulfonic acid. Further, after the polymerization of the resin, sulfonization with a sulfonating agent such as sulfuric acid, fuming sulfuric acid, or sulfamic acid is preferred.

Specific examples of other monomers copolymerizable with anionic group-containing monomers include (meth)acrylic esters such as methyl acrylate, ethyl acrylate, isopropyl acrylate, n-propyl acrylate, n-butyl acrylate, t-butyl acrylate, 2-ethylhexyl acrylate, n-octyl acrylate, lauryl acrylate, benzyl acrylate, methyl methacrylate, ethyl methacrylate, isopropyl methacrylate, n-propyl methacrylate, n-butyl methacrylate, isobutyl methacrylate, t-butyl methacrylate, 2-ethylhexyl methacrylate, n-octyl methacrylate, lauryl methacrylate, stearyl methacrylate, tridecyl methacrylate, and benzyl methacrylate; adducts of a fatty acid with a (meth)acrylic ester monomer having an oxirane structure, such as an adduct of stearic acid with glycidyl methacrylate; adducts of an oxirane compound containing an alkyl group having 3 or more carbon atoms with (meth)acrylic acid; styrene monomers such as styrene, α-methylstyrene, o-methylstyrene, m-methylstyrene, p-methylstyrene, and p-tert-butylstyrene; itaconic esters such as benzyl itaconate; maleic esters such as dimethyl maleate; fumaric esters such as dimethyl fumarate; and acrylonitrile, methacrylonitrile, vinyl acetate, isobornyl acrylate, isobornyl methacrylate, aminoethyl acrylate, aminopropyl acrylate, methylaminoethyl acrylate, methylaminopropyl acrylate, ethylaminoethyl acrylate, ethylaminopropyl acrylate, aminoethylacrylamide, aminopropylacrylamide, methylaminoethylacrylamide, methylaminopropylacrylamide, ethylaminoethylacrylamide, ethylaminopropylacrylamide, methacrylamide, aminoethyl methacrylate, aminopropyl methacrylate, methylaminoethyl methacrylate, methylaminopropyl methacrylate, ethylaminoethyl methacrylate, ethylaminopropyl methacrylate, aminoethylmethacrylamide, aminopropylmethacryl-amide, methylaminoethylmethacrylamide, methylaminopropyl-methacrylamide, ethylaminoethylmethacrylamide, ethylaminopropylmethacrylamide, hydroxymethyl acrylate, 2-hydroxyethyl acrylate, 2-hydroxypropyl acrylate, hydroxymethyl methacrylate, 2-hydroxyethyl methacrylate, 2-hydroxypropyl methacrylate, N-methylolacrylamide, and allyl alcohol.

In the present invention, the dispersing resin has preferably, a number average molecular weight in the range of about 1,000 to 200,000, particularly preferably in the range of about 3,000 to 150,000. The number average molecular weight of the dispersing resin in the above-defined range can give the dispersing resin which satisfactorily functions as a covering film in the colorant or a coating film in the water-based ink composition.

For example, organic amines and alkali metal salt compounds may be mentioned as the alkaline compound for neutralizing a part of the unneutralized group in the anionic group-containing dispersing resin. Specific examples of salts with organic amines include salts with volatile amine compounds such as ammonia, triethylamine, tributylamine, dimethylethanolamine, diisopropanolamine, or morpholine, or salts with hardly volatile high-boiling organic amines such as diethanolamine, triethanolamine, or tripropanolamine. Specific examples of alkali metal salt compounds include compounds having lithium, sodium, or potassium as the alkali metal, preferably salts with alkali metal hydroxide salts such as sodium hydroxide, potassium hydroxide, or lithium hydroxide, more preferably salts with potassium hydroxide.

Regarding organic amines usable also as the weakly alkaline agent which will be described later, a part or the whole of the weakly alkaline agent contained in the final ink formulation can be previously added in the dispersing resin at the time of neutralization.

The ratio between the hydrophobic part and the hydrophilic part in the dispersing resin is preferably such that, for the anionic group content, the content of the hydrophilic part is not less than about 30 KOH mg/g, more preferably in the range of about 50 to 250 KOH mg/g, in terms of the acid value.

[Colorant]
In the present invention, organic pigments, carbon black, oil soluble dyes, disperse dyes and the like may be mentioned as colorants that are insoluble or hardly soluble in water medium. Carbon black, organic pigments, oil soluble dyes, and disperse dyes are particularly preferred, because color development is good and settling is less likely to occur at the time of dispersion due to low specific gravity.

In the water-based ink composition according to the present invention, the colorant is included in the dispersing resin and is dispersed in the ink composition.

Specific examples of preferred carbon blacks in the present invention include: carbon blacks manufactured by Mitsubishi Chemical Corporation, for example, No. 2300, No. 900, MCF 88, No. 20B, No. 33, No. 40, No. 45, No. 52, MA 7, MA 8, MA 100, and No. 2200 B; carbon blacks manufactured by Degussa, for example, Color Black FW 1, Color Black FW 2, Color Black FW 2 V, Color Black FW 18, Color Black FW 200, Color Black S 150, Color Black S 160, Color Black S 170, Pritex 35, Pritex U, Pritex V, Pritex 140 U, Special Black 6, Special Black 5, Special Black 4A, Special Black 4 and Special Black 250; carbon blacks manufactured by Columbian Carbon Co., Ltd., for example, CONDUCTEX SC, Raven 1255, Raven 5750, Raven 5250, Raven 5000, Raven 3500, Raven 1255, and Raven 700; and carbon blacks manufactured by Cabot Corporation, for example, Regal 400R, Regal 330R, Regal 660R, Mogul L, Monarch 700, Monarch 800, Monarch 880, Monarch 900, Monarch 1000, Monarch 1100, Monarch 1300, Monarch 1400, and Elftex 12. The carbon blacks may be used either solely or as a mixture of two or more.

In the present invention, preferred organic pigments include: quinacridone pigments, quinacridone quinone pigments, dioxazine pigments, phthalocyanine pigments, anthrapyrimidine pigments, anthanthrone pigments, indanthrone pigments, flavanthrone pigments, perylene pigments, diketopyrrolopyrrole pigments, perinone pigments, quinophthalone pigments, anthraquinone pigments, thioindigo pigments, benzimidazolone pigments, isoindolinone pigments, azomethine pigments, and azo pigments.

In the present invention, preferred oil soluble dyes and disperse dyes include any coloring material that is dispersible in ink vehicles without dissolution, and examples thereof include azo coloring materials, metal complex azo coloring materials, anthraquinone coloring materials, phthalocyanine coloring materials, and triallylmethane coloring materials.

The following organic pigments may be mentioned as specific examples of the organic pigment used in the water-based ink composition in the present invention. Specifically, cyan pigments include C.I. Pigment Blue 1, C.I. Pigment Blue 2, C.I. Pigment Blue 3, C.I. Pigment Blue 15 : 3, C.I. Pigment Blue 15 : 4, C.I. Pigment Blue 15 : 34, C.I. Pigment Blue 16, C.I. Pigment Blue 22, and C.I. Pigment Blue 60; and C.I. Vat Blue 4 and C.I. Vat Blue 60. Preferably, the cyan pigment may be one or a mixture of two or more pigments selected from the group consisting of C.I. Pigment Blue 15 : 3, C.I. Pigment Blue 15 : 4, and C.I. Pigment Blue 60.

Magenta pigments include C.I. Pigment Red 5, C.I. Pigment Red 7, C.I. Pigment Red 12, C.I. Pigment Red 48(Ca), C.I. Pigment Red 48(Mn), C.I. Pigment Red 57(Ca), C.I. Pigment Red 57 : 1, C.I. Pigment Red 112, C.I. Pigment Red 122, C.I. Pigment Red 123, C.I. Pigment Red 168, C.I. Pigment Red 184, and C.I. Pigment Red 202, and C.I. Pigment Violet 19. Preferably, the magenta pigment may be one or a mixture of two or more pigments selected from the group consisting of C.I. Pigment Red 122, C.I. Pigment Red 202, C.I. Pigment Red 209, and C.I. Pigment Violet 19.

Yellow pigments include C.I. Pigment Yellow 1, C.I. Pigment Yellow 2, C.I. Pigment Yellow 3, C.I. Pigment Yellow 12, C.I. Pigment Yellow 13, C.I. Pigment Yellow 14C, C.I. Pigment Yellow 16, C.I. Pigment Yellow 17, C.I. Pigment Yellow 73, C.I. Pigment Yellow 74, C.I. Pigment Yellow 75, C.I. Pigment Yellow 83, C.I. Pigment Yellow 93, C.I. Pigment Yellow 95, C.I. Pigment Yellow 97, C.I. Pigment Yellow 98, C.I. Pigment Yellow 109, C.I. Pigment Yellow 110, C.I. Pigment Yellow 114, C.I. Pigment Yellow 128, C.I. Pigment Yellow 129, C.I. Pigment Yellow 138, C.I. Pigment Yellow 150, C.I. Pigment Yellow 151, C.I. Pigment Yellow 154, C.I. Pigment Yellow 155, C.I. Pigment Yellow 180, and C.I. Pigment Yellow 185. Preferably, the yellow pigment may be one or a mixture of two or more pigments selected from the group consisting of C.I. Pigment Yellow 74, C.I. Pigment Yellow 109, C.I. Pigment Yellow 110, C.I. Pigment Yellow 128, and C.I. Pigment Yellow 138.

Orange pigments include C.I. Pigment Orange 36 or 43 or a mixture of C.I. Pigment Orange 36 with C.I. Pigment Orange 43. Green pigments include C.I. Pigment Green 7 or 36 or a mixture of C.I. Pigment Green 7 with C.I. Pigment Green 36.

In the present invention, the amount of these colorants added is 0.5 to 15% by weight, preferably 1 to 10% by weight, based on the ink composition. Further, in the present invention, the weight ratio of the colorant to the dispersing resin is preferably 10 : 1 to 1 : 10, more preferably 4 : 1 to 1 : 3. The particle diameter of the colorant may be properly determined. Preferably, however, the maximum particle diameter as measured by a dynamic light scattering method is less than 500 nm, and the average particle diameter is not more than 300 nm, more preferably not more than 200 nm.

The production process of the coloring material dispersion used in the present invention will be described later.

[Acetylene glycol surfactant]
The water-based ink composition according to the present invention contains a surfactant comprising an acetylene glycol or its ether derivative. The acetylene glycol surfactant mainly functions to accelerate the penetration of the ink into the recording medium. In particular, acetylene glycol nonionic surfactants are useful, because they have little or no foamability.

Examples of preferred acetylene glycol surfactants include acetylene glycol nonionic surfactants, and specific examples thereof include Surfynol 61, Surfynol 82, Surfynol 104, Surfynol 440, Surfynol 465, Surfynol 485, and Surfynol TG (manufactured by Air Products and Chemicals, Inc.), OLFINE STG and OLFINE E 1010 (manufactured by Nissin Chemical Industry Co., Ltd.), and Acetylenol E00, Acetylenol E00P, Acetylenol E40, and Acetylenol E100 (manufactured by Kawaken Fine Chemicals Co., Ltd).

The amount of the acetylene glycol or its ether derivative added may be properly determined by taking into consideration, for example, ink drying time. Preferably, however, the addition amount is 0.01 to 10% by weight, based on the total amount of the water-based ink composition.

In the present invention, the acetylene glycol or its ether derivative should be in mutually soluble relationship with a monohydric alcohol, a humectant, and an optional penetrating organic solvent which will be described later.

[Monohydric alcohol]
In the present invention, the monohydric alcohol has a solubility in water of not less than 0.5% by weight at 20°C and is a C1 to C5 alcohol. This monohydric alcohol mainly functions to enhance the penetrability of the ink into the recording medium.

In the present invention, examples of preferred monohydric alcohols include methanol, ethanol, n-propyl alcohol, iso-propyl alcohol, 2,2-dimethyl-1-propanol, n-butanol, 2-butanol, tert-butanol, iso-butanol, 2-methyl-1-butanol, 3-methyl-1-butanol, 3-methyl-2-butanol, n-pentanol, 2-pentanol, 3-pentanol, and tert-pentanol.
In the present invention, the amount of the monohydric alcohol added may be properly determined by taking into consideration various properties of the ink composition and dissolution in the acetylene glycol or its ether derivative. Preferably, however, the addition amount is in the range of 0.5 to 10% by weight based on the ink composition.

[Humectant]
The water-based ink composition according to the present invention contains a humectant. The humectant mainly functions to suppress the water-based ink composition from drying and to suppress the vaporization of water caused by drying of the front end of printer head nozzles to prevent coagulation and solidification of water-based ink composition.

The humectant is selected from materials that are soluble in water and hygroscopic. Examples of preferred humectants include: polyols such as glycerin, ethylene glycol, diethylene glycol, triethylene glycol, tetraethylene glycol, polyethylene glycol, propylene glycol, dipropylene glycol, polypropylene glycol, 1,3-propanediol, 1,4-butanediol, 1,5-pentanediol, 2,3-butanediol, 2-methyl-2,4-pentanediol, 1,2,6-hexanetriol, and pentaerythritol; lactams such as 2-pyrrolidone and N-methyl-2-pyrrolidone; and urea compounds such as 1,3-dimethylimidazolidinones.

In a preferred embodiment of the present invention, a water soluble solid humectant may be used in combination and added from the viewpoint of assisting the capability of the above moisture retaining organic solvents. Specific examples thereof include diols such as 1,6-hexanediol, 1,8-octanediol, 2,2-dimethyl-1,3-propanediol, and 2,2-diethyl-1,3-propanediol, trimethylolethane and trimethylolpropane, lactams such as ε-caprolactam, urea derivatives such as urea, thiourea, and ethylene urea, monosaccharides, disaccharides, oligosaccharides, and polysaccharides, such as glucose, mannose, fructose, ribose, xylose, arabinose, galactose, aldonic acid, glucitol, sorbit, maltose, cellobiose, lactose, sucrose, trehalose, and maltotriose, and derivatives of these saccharides such as reducing sugars of the above saccharides, oxidized sugars, amino acids, and thiosugars. Sugar alcohols are particularly preferred, and specific examples thereof include maltitol and sorbit.

These humectants may be used either solely or as a mixture of two or more. The amount of the humectant added may be properly determined by taking into consideration various properties of the ink composition and dissolution in the acetylene glycol or its ether derivative. Preferably, however, the addition amount is 1 to 40% by weight, more preferably 1 to 30% by weight based on the total amount of the water-based ink composition. The amount of the humectant added is preferably properly regulated so that the viscosity of the ink composition at 25°C is not more than 25 cPs.

[Penetrating organic solvent]
In a preferred embodiment of the present invention, the water-based ink composition according to the present invention may contain a penetrating organic solvent. Examples of preferred penetrating organic solvents include glycol monoether derivatives of polyhydric alcohols, 1,2-alkyldiols, and derivatives having a 1,3-propanediol skeleton.

Particularly preferred glycol monoether derivatives of polyhydric alcohols are polyhydric alcohol derivatives in which the alkyl group contains 3 or more carbon atoms. Specific examples thereof include ethylene glycol monobutyl ether, diethylene glycol mono-n-propyl ether, ethylene glycol mono-iso-propyl ether, diethylene glycol mono-iso-propyl ether, ethylene glycol mono-n-butyl ether, ethylene glycol mono-t-butyl ether, diethylene glycol mono-n-butyl ether, triethylene glycol mono-n-butyl ether, diethylene glycol mono-t-butyl ether, 1-methy-1-methoxybutanol, propylene glycol mono-t-butyl ether, propylene glycol mono-n-propyl ether, propylene glycol mono-iso-propyl ether, propylene glycol mono-n-butyl ether, dipropylene glycol mono-n-butyl ether, dipropylene glycol mono-n-propyl ether, and dipropylene glycol mono-iso-propyl ether. The amount of the glycol monoether derivative of polyhydric alcohol added may be properly determined by taking into consideration various properties of the ink composition and the dissolution of the acetylene glycol or its ether derivative. Preferably, however, the addition amount is 0.5 to 15% by weight based on the total amount of the water-based ink composition.

Specific examples of 1,2-alkyldiols as the penetrating organic solvent include 1,2-alkyldiols with 4 to 8 carbon atoms, for example, butanediol, pentanediol, hexanediol, heptanediol, and octanediol. 1,2-Hexanediol, 1,2-heptanediol, and 1,2-octanediol which contain 6 to 8 carbon atoms are particularly preferred because of their high level of penetration into recording media. The amount of the 1,2-alkyldiol added may be properly determined by taking into consideration various properties of the ink composition and dissolution in the acetylene glycol or its ether derivative. Preferably, however, the addition amount is 0.25 to 15% by weight based on the total amount of the water-based ink composition.

Specific examples of derivatives having a 1,3-propanediol skeleton as the penetrating organic solvent include 2-(2,2-diethoxyethyl)-1,3-propanediol, 2-ethyl-2-hydroxymethyl-1,3-propanediol, 2,2-dimethyl-1,3-propanediol, 2,2-diethyl-1,3-propanediol, 2-ethyl-2-butyl-1,3-propanediol, 2-ethyl-1,3-hexanediol, and 2,2'-[oxybis(methylene)]bis[2-ethyl-1,3-propanediol]. The amount of the derivative having a 1,3-propanediol skeleton added may be properly determined by taking into consideration various properties of the ink composition and dissolution in the acetylene glycol or its ether derivative. Preferably, however, the addition amount is 0.25 to 15% by weight based on the total amount of the water-based ink composition.

[Additive resin]
In a preferred embodiment of the present invention, separately from the dispersing resin, a resin is added to the water-based ink composition. In the present invention, this resin is referred to as "additive resin."
Since the surface of colorants such as pigments is hydrophobic, the use of dispersants such as surfactants and aqueous resins is indispensable for stable dispersion of the pigment in water. The coloring material dispersion used in the present invention, however, is dispersed after inclusion of the colorant in the above dispersing resin, and, hence, the additive resin which is added later is not always required to have a dispersing capability. Accordingly, a resin emulsion of the above dispersing resin per se may be used as the additive resin. Alternatively, a water soluble resin and/or a water dispersible resin having no dispersing capability may be used as the additive resin.

Water soluble resins and/or water dispersible resins as the additive resin include the above dispersing resins and aqueous resins containing monomers as the starting material of the dispersing resins, and polyvinyl alcohol, polyallyl alcohol, polyhydroxyethyl methacrylate, polyvinylpyrrolidone, quaternary salts of polyvinyl pyridine, polyacrylamide, carboxymethylcellulose, hydroxypropylcellulose, starch, polylactic acid, shellac, modified rosin, phenolic resin alkali salts and the like and copolymers thereof. Further, resins produced by hydrophilizing an oil resin having no water soluble group in its molecule by oxidation, the addition of sulfonic acid or the like may also be used.

The amount of the additive resin added to the ink may be properly determined by taking into consideration, for example, various properties of the ink. Preferably, however, the addition amount is 0.5 to 20% by weight base on the total amount of the water-based ink composition.

[Weakly alkaline agent]
The water-based ink composition according to the present invention may contain a weakly alkaline agent. When a metal is used in a flow passage of the ink composition in an ink jet recording apparatus, the use of an acidic ink composition often causes corrosion of the metal. Accordingly, the water-based ink composition is preferably rendered neutral or alkaline. To this end, a weakly alkaline agent is preferably added.

The use of a strongly alkaline compound such as sodium hydroxide to render the water-based ink composition neutral or alkaline has a fear of causing the neutralization of an acid group to disadvantageously proceed when the unneutralized group is an acid group such as a carboxylic acid group or a sulfonic acid group. Therefore, in the present invention, a weakly alkaline agent is used, whereby the water-based ink composition can be kept neutral or alkaline without a great change in the neutralization rate of the dispersing resin and, thus, a more reliable water-based ink composition can be provided.

Specific examples of weakly alkaline agents include compounds selected from organic acid salts and organic buffering agents. Preferred organic acid salts include salts of alkylcarboxylic acids such as acetic acid salts and propionic acid salts, and salts of hydroxy acids such as lactic acid salts, glycolic acid salts and glyceric acid salts. Among others, alkali metal salts of akylcarboxylic acids are preferred. More preferred are sodium acetate, potassium acetate, sodium propionate, potassium propionate and the like. Preferred organic buffering agents include tris(hydroxymethyl)aminomethane, tris-hydrochloride, tris-maleic acid, and bis(2-hydroxyethyl)iminotris(hydroxymethyl)methane.

The amount of the weakly alkaline agent added may be properly determined so that the ink composition is brought to a desired pH value. In general, however, the pH value would be in the range of 0.01 to 10% by weight.

[Water]
Water is a main medium in the water-based ink composition of the present invention, and preferred examples thereof include pure water the ionic impurity content of which has been minimized, such as obtained by ion exchange, ultrafiltration, reverse osmosis, distillation or the like, or ultrapure water.
Further, water, which has been sterilized, for example, by ultraviolet irradiation or by addition of hydrogen peroxide, is preferred because, when the water-based ink composition is stored for a long period of time, it can prevent the growth of mold, bacteria or the like.

[Other ingredients]
If necessary, additives commonly used in ink jet recording inks may be added to the water-based ink composition according to the present invention. Optional additives include surfactants, hydrotropy agents, antioxidants, ultraviolet absorbers, preservatives, fungicides, or other additives.

The surfactant is an additive for accelerating the penetration of the ink into recording media. Specific examples of preferred surfactants include anionic surfactants such as fatty acid salts and alkylsulfuric acid ester salts; nonionic surfactants such as polyoxyethylene alkyl ethers and polyoxyethylene phenyl ethers; acetylene glycol nonionic surfactants; cationic surfactants; amphoteric surfactants; silicone surfactants; phosphorus surfactants; and boron surfactants. In a preferred embodiment of the present invention, the addition of a silicone surfactant is preferred, and specific examples of silicone surfactants include BYK-307, BYK-331, BYK-333, and BYK-348 (tradenames, manufactured by BYK-Chemie).

The hydrotropy agent is added from the viewpoint of improving the storage stability of the ink and anti-clogging properties, and specific examples thereof include urea, thiourea, and alkylureas.

Specific examples of preferred antioxidants/ultraviolet absorbers include: allophanates, such as allophanate and methyl allophanate; biurets, such as biuret, dimethylbiuret, and tetramethylbiuret; L-ascorbic acid and salts thereof; Tinuvin 328, 900, 1130, 384, 292, 123, 144, 622, 770, and 292, Irgacor 252 and 153, and Irganox 1010, 1076, 1035, and MD 1024, manufactured by Ciba-Geigy; or lanthanide oxides.

Specific examples of preferred preservatives and fungicides include sodium benzoate, pentachlorophenol sodium, 2-pyridinethiol-1-oxide sodium, sodium sorbate, sodium dehydroacetate, and 1,2-dibenzothiazolin-3-one.

[Production process of coloring material dispersion]
The coloring material dispersion used in the present invention is preferably produced by the following method. Specifically, according to a suitable method for dispersing the colorant with the aid of a dispersing resin, the anionic group-containing polymer is dissolved or dispersed in an aqueous alkaline solution containing an alkaline compound such as an organic amine or an alkali metal salt compound, and this liquid is mixed with the colorant followed by dispersing in a dispergator, for example, a ball mill, a sand mill, an attritor, a roll mill, an agitator mill, a Henschel mixer, a colloid mill, an ultrasonic homogenizer, a jet mill, or an angmill. More preferably, from the viewpoint of more strongly bonding the pigment and the dispersing polymer to each other for dispersion stabilization, the coloring material dispersion may also be produced by methods disclosed in Japanese Patent Laid-Open No. 151342/1997, 140065/1998, 209672/1999, 172180/1999, 25440/1998, 43636/1999, or 247810/2001. Production processes disclosed in these publications will be briefly described.

Japanese Patent Laid-Open Nos. 247810/2001, 151342/1997, and 140065/1998 disclose "phase inversion method" and "salting-out method."

a) "Phase inversion method"
The term "phase inversion method" as used herein basically refers to a self-dispersion (phase inversion emulsification) method in which a mixed melt comprised of a polymer having self-dispersivity or dissolvability and a pigment is dispersed in water. The term "mixed melt" as used herein refers to an undissolved and mixed state or a dissolved mixed state, or both the above states.

One specific example thereof comprises the steps of: (1) adding a pigment, a neutralizing agent, and a minor amount of water to a dispersing resin precursor (for example, the above-described anionic group-containing polymer)/solvent solution to prepare a solvent-based slurry, (2) conducting dispersing while adding the slurry to a large amount of water to prepare a water-based slurry, and (3) removing the solvent used for dissolving the polymer from the water-based slurry to prepare a pigment-containing polymer particle coloring material dispersion comprising the pigment included in the water-dispersed polymer.

b) "Salting-out method"
In the present invention, the "salting-out method" refers to a method in which a hydrous cake comprising a polymer and a pigment is provided and a part of the unneutralized group contained in the polymer in the hydrous cake is neutralized with a neutralizing agent to prepare a colorant.

When the unneutralized group is an anionic acid group and the neutralizing agent is a basic compound, a specific example of the salting-out method comprises the steps of: (1) dispersing a polymer and a pigment in an alkaline aqueous medium and optionally heating the dispersion to bring the resin to gel, (2) adjusting pH to a neutral or acidic pH value to hydrophobilize the polymer and, thus, to strongly fix the polymer to the pigment, (3) if necessary, conducting filtration and washing with water to give hydrous cake, (4) neutralizing a part or the whole of anionic groups contained in the polymer in the hydrous cake with a basic compound followed by redispersion in an aqueous medium, and (5) if necessary, heat-treating the dispersion to bring the polymer to gel.

More specific production processes utilizing the "phase inversion method" and the "salting-out method" may be the same as disclosed in Japanese Patent Laid-Open Nos. 151342/1997 and 140065/1998.

Further, a production process of a colorant is disclosed in Japanese Patent Laid-Open Nos. 209672/1999 and 172180/1999. This production process basically comprises the steps of:
(1) mixing an anionic group-containing polymer or a solution of the anionic group-containing polymer in an organic solvent with a basic compound to neutralize the anionic group-containing polymer, (2) mixing a pigment into this mixed liquid to prepare a suspension and then dispersing the pigment by means of a dispergator or the like to prepare a pigment dispersion, (3) if necessary, removing the solvent by distillation, (4) adding an acidic compound to precipitate the anionic group-containing polymer to coat the pigment with the anionic group-containing polymer, (5) if necessary, conducting filtration and washing with water, and (6) adding a basic compound to neutralize the anionic group in the anionic group-containing polymer and thus to disperse the polymer in an aqueous medium to prepare an aqueous coloring material dispersion.

The production process may be the same as that disclosed in Japanese Patent Laid-Open Nos. 2096722/1999 and 172180/1999.

The water-based ink composition may be suitably produced by adding the above 2-ethyl-1,3-hexanediol and water and optionally the above water soluble organic solvent, weak alkaline agent and other ingredients to the aqueous dispersion of a colorant thus obtained.

[ink et recording method]
The water-based ink composition according to the present invention is suitable for use in an ink jet recording method. In the present invention, the ink jet recording method may be any method so far as the ink composition is ejected as fine droplets through nozzles and the droplets are deposited on a recording medium. An example of the ink jet recording method is a static electricity-driven ejection method. In this method, an intense electric field is applied across the nozzle and an accelerating electrode disposed in front of the nozzle, the ink is continuously ejected as droplets through the nozzle, and, during a period in which the ink droplets are projected between deflecting electrodes, printing information signals are sent to the deflecting electrodes for recording, or alternatively ink droplets are ejected in response to printing information signals without deflection.

Another ink jet recording method is a method in which pressure is applied to an ink liquid by means of a small pump and nozzles are mechanically vibrated, for example, by a quartz oscillator to forcibly eject ink droplets through the nozzles. The ejected ink droplets are electrified simultaneously with the ejection, and, during a period in which the ink droplets are projected between deflecting electrodes, printing information signals are sent to the deflecting electrodes for recording.

A method using a piezoelectric element may be mentioned as still another ink jet recording method. In this method, pressure and printing information signals are simultaneously applied to an ink liquid by a piezoelectric element to eject ink droplets for recording.

A further ink jet recording method is a method in which the volume of an ink liquid is rapidly expanded through the action of thermal energy. In this method, an ink liquid is heat-foamed by microelectrodes in response to printing information signals to eject ink droplets for recording.

Among the above various ink jet recording methods, particularly a combination of a method, in which printing is carried out at a relatively low ink ejection rate of not more than 10 m/sec, with the water-based ink composition according to the present invention is preferred because the combination can prevent the deposition of the ink on ejection nozzles and thus can realize stable ink jet recording.

The above ink jet recording methods can be used for printing of the water-based ink composition according to the present invention on recording media to provide records having excellent image qual ity or other properties.

### EXAMPLES

The present invention will be described in more detail with reference to the following Examples. However, it should be noted that the scope of the present invention is not limited to these Examples only.

Preparation of dispersions
(1) Dispersion K1
   MA 100 (tradename, manufactured by Mitsubishi Chemical Corporation) (75 g) as carbon black, 25 g of Joncryl 611 (tradename, manufactured by Johnson Polymer Corp., average molecular weight 8100, acid value 53 KOH mg/g) as a styrene-acrylic acid dispersing resin containing carboxylic acid groups as an anionic group, 1.0 g of potassium hydroxide, and 250 g of ultrapure water purified by an ion exchange method and a reverse osmosis method were mixed together, and the mixture, together with zirconia beads, was dispersed in a ball mill for 10 hr. The dispersion stock thus obtained was filtered through a membrane filter with a pore diameter of about 8 µm (tradename, manufactured by Nihon Millipore, Ltd.) to remove coarse particles and was diluted with ultrapure water to a pigment concentration of 15% by weight to prepare dispersion K1 which had been dispersed with the aid of a dispersing resin.

(2) Dispersion C1
A dispersion was prepared in the same manner as in dispersion K1, except that 65 g of C.I. Pigment Blue 15 : 3 as an organic pigment was used instead of the carbon black, the amount of the dispersing resin added was changed to 35 g, and the amount of the potassium hydroxide added was changed to 1.70 g. The dispersion thus obtained was designated as dispersion C1.

(3) Dispersion M1
[Synthesis of dispersing resin]
The air in a reaction vessel equipped with a stirrer, a thermometer, a reflux tube, and a dropping funnel was replaced by nitrogen. Thereafter, 25 g of styrene, 30 g of n-dodecyl methacrylate, 20 g of methoxypolyethylene glycol methacrylate, 15.5 g of butyl methacrylate, and 9.3 g of methacrylic acid were dissolved in 100 g of methyl ethyl ketone, followed by nitrogen gas replacement.
The same monomer/methyl ethyl ketone solution was placed in the dropping funnel, and 0.2 g of 2,2'-azobis(2,4-isomethylvaleronitrile) was further added, followed by nitrogen gas replacement.

The solution in the reaction vessel was heated to 65°C in a nitrogen atmosphere, and a polymerization reaction was allowed to proceed while adding the solution in the dropping funnel over a period of 3 hr. The resultant copolymer solution was purified by repeating vacuum drying, dissolution in methyl ethyl ketone, and filtration, and methyl ethyl ketone was then added for dilution to a resin solid content of 50% by weight. Thus, resin solution A having an acid value of about 70 KOH mg/g and an average molecular weight of 50,000 was prepared.

[Preparation of coloring material dispersion]
An organic pigment, C.I. Pigment Red 122 (200 g) and 100 g of resin solution A were mixed together, and the mixture was stirred to prepare slurry. A 10 wt% aqueous potassium hydroxide solution (39.5 g) was added to this slurry, followed by dispersion in an ultrahigh-pressure homogenizer.

Subsequently, this dispersion was gradually added to 400 g of pure water with stirring. The whole of methyl ethyl ketone and a part of water were then removed at 60°C under the reduced pressure. Further, ultrapure water was added to bring the pigment concentration to 15% by weight to give dispersion M1.

(4) Dispersion Y1
A dispersion was prepared in the same manner as in dispersion M1, except that 150 g of C.I. Pigment Yellow 74, an organic pigment, was used and the amount of the 10 wt% aqueous potassium hydroxide solution added was changed to 39.5 g. The dispersion thus obtained was designated as dispersion Y1.

(5) Dispersion C2
A dispersion was prepared in the same manner as in dispersion M1, except that 50 g of C.I. Pigment Blue 15 : 4, an organic pigment, was used and the amount of the 10 wt% aqueous potassium hydroxide solution added was changed to 47.5 g. The dispersion thus obtained was designated as dispersion C2.

(6) Dispersion M3
A dispersion was prepared in the same manner as in dispersion K1, except that 70 g of C.I. Disperse Red 4, a disperse dye, was used, the amount of the disperse resin added was changed to 35 g, and the amount of potassium hydroxide added was changed to 1.70 g. The dispersion thus obtained was designated as dispersion M3.

(7) Dispersion C3
A dispersion was prepared in the same manner as in dispersion M1, except that 50 g of C.I. Solvent Blue 25, an oil soluble dye, was used and the amount of the 10 wt% aqueous potassium hydroxide solution added was changed to 47.5 g. The dispersion thus obtained was designated as dispersion C3.

(8) Dispersion K3
MA 100 (tradename, manufactured by Mitsubishi Chemical Corporation) (75 g) as carbon black, 25 g of Joncryl 678 (tradename, manufactured by Johnson Polymer Corp., average molecular weight 8,500, acid value 215 KOH mg/g) as a styrene-acrylic acid water soluble resin containing carboxylic acid groups as an anionic group, 3.60 g of potassium hydroxide in an amount exceeding a neutralization rate of 100%, and 250 g of ultrapure water purified by an ion exchange method and a reverse osmosis method were mixed together, and the mixture, together with zirconia beads, was dispersed in a ball mill for 10 hr. The dispersion stock thus obtained was filtered through a membrane filter with a pore diameter of about 8 µm (tradename, manufactured by Nihon Millipore, Ltd.) to remove coarse particles and was diluted with ultrapure water to a pigment concentration of 15% by weight to prepare dispersion K3 which had been dispersed with the aid of a water soluble resin.

(9) Dispersion C4
A dispersion was prepared in the same manner as in dispersion K3, except that 40 g of C.I. Pigment Blue 15 : 4 as an organic pigment was used instead of the carbon black, the amount of the resin added was changed to 40 g, and the amount of the potassium hydroxide added, which was an amount exceeding a neutralization rate of 100%, was changed to 8.0 g. The dispersion thus obtained was designated as dispersion C4.

Preparation of water-based inks Example 1
Dispersion K1 (46 g), 1 g of Surfynol 104, and 1 g of Surfynol 465 as acetylene glycol (Surfynol 104 and Surfynol 465 being tradenames and manufactured by Air Products and Chemicals, Inc.), 5 g of 2-butanol as a monohydric alcohol and as a resolvent for the acetylene glycol, 20 g of triethylene glycol as a humectant, 4 g of 2-pyrrolidone, and ultrapure water in an amount for brining the total amount of the mixture to 100 g were stirred for 2 hr, and the mixture was filtered through a membrane filter with a pore diameter of about 1.2 µm (tradename, manufactured by Nihon Millipore, Ltd.) to prepare a water-based ink composition.

Examples 2 to 15
Inks were prepared in the same manner as in Example 1, except that the formulation was changed as shown in Table 1. As shown in Table 1, for Examples 6 and 8, Movinyl 742N (tradename, manufactured by Clariant Polymers K.K.) was used as additive resin 1. For Examples 7, 13, 14, and 15, a resin emulsion comprising 30 wt% resin only was prepared in the same manner as in Example 1, except that resin solution A was used as additive resin 2 and C.I. Pigment Red 122 was not added to dispersion M1.

Comparative Example 1
An ink was prepared in the same manner as in Example 1, except that dispersion K3, which had a high acid value and wherein the dispersing resin per se was soluble in water by adding an alkali component in an amount exceeding a neutralization rate of 100% and conducting dispersion, was used.

Comparative Example 2
An ink was prepared in the same manner as in Example 2, except that dispersion C4, which had a high acid value and wherein the dispersing resin per se was soluble in water by adding an alkali component in an amount exceeding a neutralization rate of 100% and conducting dispersion, was used.

Chemical compositions of Examples 1 to 15 and Comparative Examples 1 and 2 were as shown in Table 1.

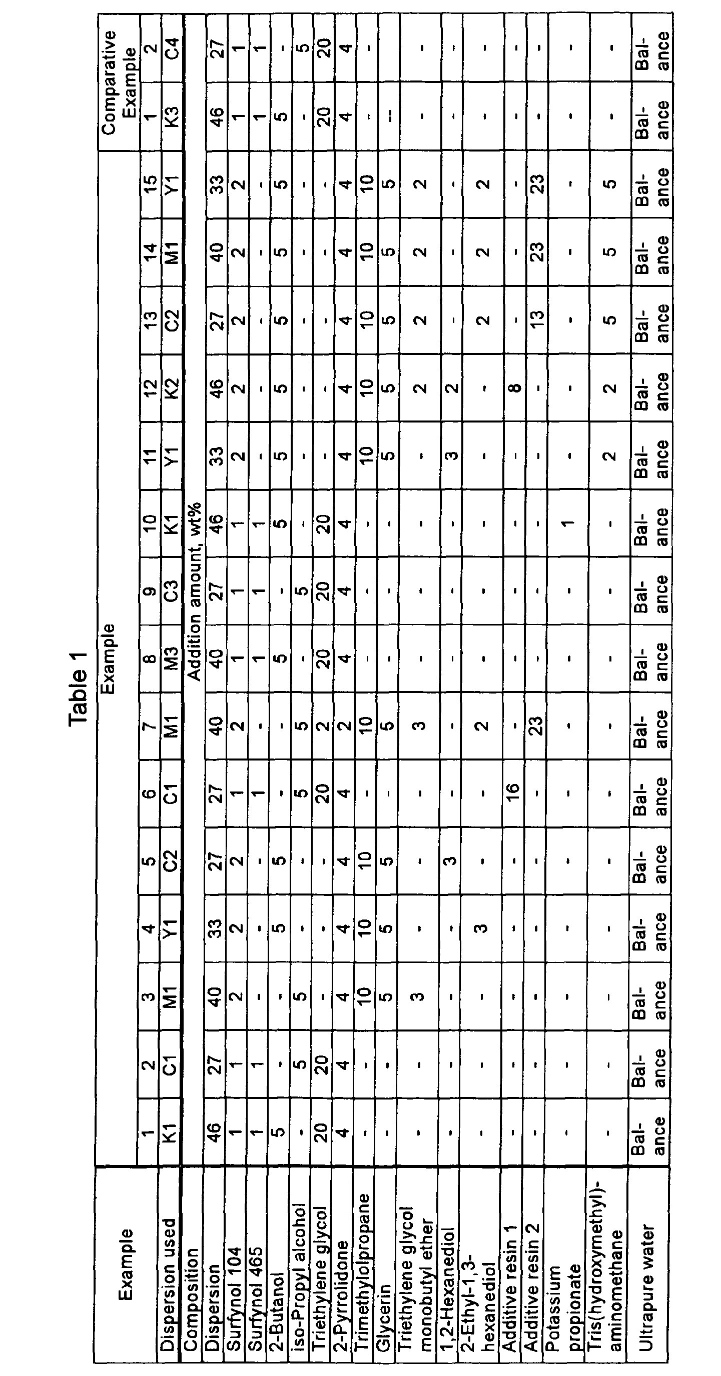

Evaluation tests Storage stability
The ink compositions of Examples 1 to 15 and Comparative Examples 1 and 2 were allowed to stand at 60°C for 2 weeks, were allowed to stand for one month, and were frozen and allowed to stand for one week. The viscosity of the inks after standing were measured and compared with the viscosity just after the preparation. The results were evaluated according to the following criteria.
Grade A: A fluctuation range of less than ± 6%
Grade B: A fluctuation range of not less than ± 6% and less than ± 10%
Grade C: A fluctuation range of not less than ± 10%

Ejection stability
The ink compositions of Examples 1 to 15 and Comparative Examples 1 and 2 were loaded on an ink jet printer PX-V700 (tradename, manufactured by Seiko Epson Corporation). Images comprising characters and full density blotted parts which are present together were continuously printed under an environment of 25°C/40% RH to visually inspect for defects such as ink droplet trajectory directionality problems and ink dot missing in images being printed. The results were evaluated according to the following criteria.
- Grade AA:: Neither ink droplet trajectory directionality problems nor ink dot missing was observed in continuous printing of 200 sheets of printing paper.
- Grade A :: Neither ink droplet trajectory directionality problems nor ink dot missing was observed in continuous printing of 100 sheets of printing paper, although ink droplet trajectory directionality problems and ink dot missing occurred in continuous printing of 200 sheets of printing paper.
- Grade B :: Ink droplet trajectory directionality problems and ink dot missing occurred in less than 10 places in continuous printing of 100 sheets of printing paper.
The results of the evaluation tests were as shown in Table 2 below.

**Table 2**

| Evaluation results | Storage stability | Ejection stability |
|---|---|---|
| Example 1 | A | A |
| Example 2 | A | A |
| Example 3 | A | AA |
| Example 4 | A | AA |
| Example 5 | A | AA |
| Example 6 | A | A |
| Example 7 | A | AA |
| Example 8 | A | A |
| Example 9 | A | A |
| Example 10 | A | A |
| Example 11 | A | AA |
| Example 12 | A | AA |
| Example 13 | A | AA |
| Example 14 | A | AA |
| Example 15 | A | AA |
| Comparative Example 1 | A | B |
| Comparative Example 2 | A | B |

## Claims

1. A water-based ink composition **characterized by** comprising
- a coloring material dispersion comprising a colorant and a dispersing resin including the colorant,
- an acetylene glycol or its ether derivative,
- a C1 to C5 monohydric alcohol which has a solubility in water of not less than 0.5% by weight at 20°C,
- a humectant, and
- water,
the dispersing resin being insoluble in water,
the coloring material dispersion being dispersible in the ink composition,
the alcohol and the humectant being mutually soluble in the acetylene glycol or its ether derivative.

2. The water-based ink composition according to claim 1, which further comprises a penetrating organic solvent and wherein the alcohol, the humentacnt and the penetrating organic solvent are mutually soluble in the acetylene glycol or its ether derivative.

3. The water-based ink composition according to claim 1 or 2, which comprises a water soluble and/or water dispersible additive resin.

4. The water-based ink composition according to any one of claims 1 to 3, wherein the penetrating organic solvent is selected from the group consisting of glycol monoether derivatives of polyhydric alcohols, 1,2-alkyldiols, and derivatives having a 1,3-propanediol skeleton.

5. The water-based ink composition according to any one of claims 1 to 4, wherein the colorant is carbon black.

6. The water-based ink composition according to any one of claims 1 to 4, wherein the colorant is an organic pigment.

7. The water-based ink composition according to any one of claims 1 to 4, wherein the colorant is an oil soluble dye or a disperse dye.

8. The water-based ink composition according to any one of claims 1 to 7, which further comprises a weakly alkaline agent and is alkaline.

9. The water-based ink composition according to claim 8, wherein the weakly alkaline agent is at least one member selected from organic amines, organic acid salts, and organic buffering agents.

10. The water-based ink composition according to any one of claims 1 to 9, wherein the resin has a structure having both a hydrophobic moiety and a hydrophilic moiety.

11. The water-based ink composition according to claim 10, wherein the hydrophobic moiety comprises repeating units containing an alkyl group, a cycloalkyl group, an aromatic ring, or an unnutralized group,
the hydrophilic moiety comprising repeating units containing a group formed by neutralizing the unneutralized group.

12. The water-based ink composition according to claim 11, wherein the unneutralized group and the neutralized group are a carboxylate group and a carboxylate anion group.

13. The water-based ink composition according to claim 12, wherein the carboxylate anion group is a carboxylic acid salt.

14. The water-based ink composition according to claim 13, wherein the carboxylic acid salt is at least one member selected from the group consisting of lithium carboxylate, sodium carboxylate, potassium carboxylate, and ammonium carboxylate.

15. An ink jet recording method comprising the steps of: ejecting droplets of a water-based ink composition according to any one of claims 1 to 14; and depositing the droplets onto a recording medium to perform recording.

16. A record produced by printing using a recording method according to claim 15.
